# EUROPEAN PATENT APPLICATION

(11) **EP 4 699 993 A1**
(43) Date of publication of application: **25.02.2026**
(21) Application number: 25187993.8
(22) Date of filing: 08.07.2025
(51) Int. Cl.: C03C 19/00, C03C 21/00, C03C 15/02

(54) **GLASS PANEL AND METHOD FOR FORMING GLASS PANEL HAVING CURVED CORNER PORTION**

(30) Priority: 21.08.2024 KR 20240111726; 23.12.2024 KR 20240194441
(71) Applicant: Hana Technology Co., Ltd., Gyeonggi-do 17118 (KR)
(72) Inventor: LEE, Chang Seok, 17118 Yongin-si, Gyeonggi-do (KR); CHOI, Jae Hyun, 17118 Yongin-si, Gyeonggi-do (KR); CHOI, Kyoung Ho, 17118 Yongin-si, Gyeonggi-do (KR); CHOI, Sung Hoon, 17118 Yongin-si, Gyeonggi-do (KR)
(74) Representative: Stöckeler, Ferdinand

(57) **Abstract**

Proposed are a glass panel and a method for forming a glass panel having a curved corner portion. More particularly, proposed are a method for forming a glass panel having a corner portion with a rounded shape or a D-cut shape and the glass panel formed by the method. The corner portion with the rounded shape or the D-cut shape is formed by thermally chamfering an outer surface portion and the corner portion of the glass panel by using a processing member such as a heating rod after the glass panel is tempered before or after cutting the glass panel from a mother glass.

## Description

### CROSS REFERENCE TO RELATED APPLICATION

The present application claims priority to Korean Patent Application No. 10-2024-0194441, filed December 23, 2024, and Korean Patent Application No. 10-2024-0111726, filed August 21, 2024, the entire contents of which are incorporated herein for all purposes by this reference.

### BACKGROUND

### Technical Field

The present disclosure relates to a glass panel and a method for forming a glass panel having a curved corner portion. More particularly, the present disclosure relates to a glass panel and a method for forming a glass panel having a curved corner portion, the method being performed by thermally chamfering an outer surface portion and the corner portion of the glass panel by using a processing member such as a heating rod after the glass panel is tempered before or after cutting the glass panel from a mother glass.

### Description of the Related Art

Recently, a mobile product such as a smartphone, a tablet PC, and so on is being released with various designs and functions according to the need of a consumer. In such a mobile product, a liquid crystal display, an LED panel, an OLED panel, a touch panel, and so on are mainly used as a display, and a screen protective glass (hereinafter, referred to as a "glass panel") is used for protecting a surface of the display. According to the size of the display to which such a glass panel is applied, the glass panel is cut by using a laser, a scriber, a water jet, and so on, and the glass panel is subjected to a surface treatment process, a tempering process, and so on. In the surface treatment process and the tempering process of the glass panel, a polishing process of a cut surface is required to be performed so that a roughness of the glass panel is increased so as to prevent the glass panel from being broken.

In addition, in a glass panel having a polygonal plate shape such as a quadrangle plate shape, edge portions of the glass panel are required to have rounded shapes so as to minimize an edge effect or an outer shock rate at the edge portions where adjacent surfaces meet each other. That is, the surface of the edge region is required to be processed so that the surface of the edge region has a curved shape rather than an angular shape.

As such, in order to form the edge portion of the glass panel to be rounded, it is common to perform a process of etching the edge portion by using an etching solution such as hydrofluoric acid. That is, in the conventional process, the etching process on the edge portion of the glass panel is required to be additionally performed. This causes problems that the overall process efficiency is reduced and that the cost of manufacturing the glass panel is increased.

In order to solve the problems described above, the inventors of the present disclosure provide a new glass panel and a new method for forming a glass panel having a curved corner portion, and the detailed description thereof will be described later.

### Document of Related Art

(Patent Document 1) Korean Patent No. 10-1620375 "MANUFACTURING METHOD OF ULTRA-THIN TYPE GLASS PLATE INCLUDING LAMINATING AND CUTTING PROCESS"

### SUMMARY

Accordingly, the present disclosure has been made keeping in mind the above problems occurring in the related art, and an objective of the present disclosure is to provide a glass panel and a method for forming a glass panel having a curved corner portion with a rounded shape or a D-cut shape by thermally chamfering an outer surface portion and the corner portion of the glass panel by using a processing member such as a heating rod and so on after the glass panel is cut and tempered.

In addition, another objective of the present disclosure is to provide a glass panel and a method for forming a glass panel having a curved corner portion, the method being configured such that the corner portion of the glass panel is rounded by utilizing a conventional process without adding a separate process such as an etching process or a chemical polishing process, thereby being capable of preventing the reduction in the process efficiency and also being capable of relatively reducing the manufacturing cost of the glass panel.

In addition, yet another objective of the present disclosure is to provide a glass panel and a method for forming a glass panel having a curved corner portion, the method being configured such that glass dust on an outer surface of the glass panel is capable of being conveniently removed by performing a thermal chamfering process.

In addition, still another objective of the present disclosure is to provide a glass panel and a method for forming a glass panel having a curved corner portion, the method being configured such that an additional tempering process for a side surface of the glass panel is performed after a thermal chamfering process for the glass panel is performed, thereby being capable of supplementing the brittleness for the side surface of the glass panel.

In addition, a further objective of the present disclosure is to provide a glass panel and a method for forming a glass panel having a curved corner portion, the method being configured such that an outer surface portion and the corner portion of the glass panel are thermally chamfered by using a processing member such as a heating rod after a cell-unit glass panel is formed by cutting a mother glass that is tempered, thereby providing the curved corner portion having a rounded shape or a D-cut shape.

In addition, still a further objective of the present disclosure is to provide a glass panel and a method for forming a glass panel having a curved corner portion, the method being configured such that a mother glass is tempered before a cell-unit glass panel is formed, thereby being capable of preventing direct damage such as a scratch and so on to the mother glass during a cutting process and also capable of securing the mechanical rigidity so that the glass panel is prevented from being damaged during a subsequent process.

In addition, yet a further obj ective of the present disclosure is to provide a glass panel and a method for forming a glass panel having a curved corner portion, the method being configured such that a first healing process and/or a second healing process is performed on the thermally chamfered glass panel so that a fine crack on a surface of a first tempered layer is removed, thereby being capable of preventing the reduction in the strength of the glass panel and also capable of realizing a smoother surface of the curved portion.

The present disclosure may be implemented by one or more embodiments having some or all of the following configurations, to achieve one or more of the above-described objectives.

According to an aspect of the present disclosure, there is provided a glass panel having a curved corner portion, the glass panel including: a first tempered layer provided on at least one side selected from a first surface and a second surface opposite to the first surface, wherein one side surface of the first tempered layer has a rounded shape.

In the glass panel having the curved corner portion according to the present disclosure, the glass panel may further include: a second tempered layer provided on one side surface of the glass panel, wherein an outer side surface of the second tempered layer may have a curved shape continuous with an adjacent side surface of the first tempered layer at the first surface or at the second surface.

According to an aspect of the present disclosure, there is provided a method for forming a glass panel having a curved corner portion, the method including: a cutting process in which at least one cell-unit glass panel is acquired by cutting a mother glass; a first tempering process in which a first tempered layer is formed on a first surface of the glass panel and/or a second surface opposite to the first surface; and a thermal chamfering process in which an outer surface portion and a corner portion of the glass panel that is cut and that has the first tempered layer are thermally chamfered, wherein, after the thermal chamfering process is performed, the glass panel provided with the first tempered layer has a rounded corner portion.

In the method according to the present disclosure, in the first tempering process, the first tempered layer may be formed on the mother glass before the cutting process is performed.

In the method according to the present disclosure, in the first tempering process, the first tempered layer may be formed on the glass panel that is cut.

In the method according to the present disclosure, the glass panel may include alkali metal ion having a first diameter, and the first tempering process may include a dipping process in which the glass panel is dipped into a tempering solution comprising alkali metal ions having a second diameter that is larger than the first diameter.

In the method according to the present disclosure, the method may further include: a second tempering process in which a second tempered layer is formed on at least one side surface of the glass panel that is thermally chamfered, wherein an outer side surface of the second tempered layer may have a curved shape continuous with an adjacent side surface of the first tempered layer.

In the method according to the present disclosure, the glass panel that is thermally chamfered may include alkali metal ions having a first diameter, wherein the second tempering process may include: preparing a tempering solution including alkali metal ions having a second diameter that is larger than the first diameter; applying the tempering solution to a side surface of the glass panel that is thermally chamfered; and thermally treating the glass panel to which the tempering solution is applied.

In the method according to the present disclosure, in the thermally treating, a thermal treatment temperature may be within a range or equal to or more than 250 degrees Celsius and equal to or less than 550 degrees Celsius.

In the method according to the present disclosure, the thermal chamfering process may include: placing the tempered glass panel on a jig; and performing thermal chamfering for the glass panel on the jig by using a thermal chamfering apparatus, wherein the thermal chamfering apparatus may include: a body portion configured to fix a processing member to a lower side of the body portion; the processing member configured to be heated by receiving power and to thermally chamfer the outer surface portion and/or the corner portion of the glass panel on the jig, the processing member being configured as a heating rod; and a heat transfer portion configured to transfer heat to the processing member.

In the method according to the present disclosure, the thermal chamfering process may include: performing thermal chamfering by bringing the heated processing member into contact with a side surface of the tempered glass panel and by moving the heated processing member along a longitudinal direction of the side surface of the tempered glass panel.

In the method according to the present disclosure, the heated processing member may be configured to press the side surface of the glass panel with a constant pressing force within a range of equal to or more than 50 gf and equal to or less than 100 gf in a normal direction of the side surface of the tempered glass panel.

In the method according to the present disclosure, the method may further include: a first healing process in which the first tempered layer is etched to a predetermined thickness between the thermal chamfering process and the second tempering process, wherein the first healing process may be performed by dipping the glass panel into a healing composition containing ammonium bifluoride.

In the method according to the present disclosure, the method may further include: a second healing process in which the first tempered layer and the second tempered layer are etched to a predetermined thickness after the second tempered layer is formed on at least one side surface of the glass panel.

In the method according to the present disclosure, the method may further include: a cleaning process in which a tempering solution remaining on an outer surface of the glass panel immediately after the first tempering process is removed, wherein, in the cleaning process, the tempering solution remaining on the outer surface of the glass panel may be neutralized by using a basic solution.

According to the above configurations, the present disclosure has the following effects.

In the present disclosure, since the outer surface portion and the corner portion of the glass panel is thermally chamfered by using the processing member such as a heating rod and so on after the cut glass panel is tempered, there is an effect that the curved corner portion having the rounded shape or the D-cut shape is provided.

In addition, in the present disclosure, since the corner portion of the glass panel is rounded by utilizing the conventional process without adding a separate process such as an etching process or a chemical polishing process, there are effects that the reduction in the process efficiency is capable of being prevented and the manufacturing cost of the glass panel may be relatively reduced.

In addition, in the present disclosure, there is an effect that glass dust on the outer surface of the glass panel is capable of being conveniently removed by performing the thermal chamfering process.

In addition, in the present disclosure, since the additional tempering process for the side surface of the glass panel is performed after the thermal chamfering process for the glass panel is performed, there is an effect that the brittleness for the side surface of the glass panel is capable of being supplemented.

In addition, in the present disclosure, since the outer surface portion and the corner portion of the glass panel are thermally chamfered by using the processing member such as a heating rod after the cell-unit glass panel is formed by cutting the mother glass that is tempered, there is an effect that the curved corner portion having the rounded shape or the D-cut shape is capable of being provided.

In addition, in the present disclosure, since the mother glass is tempered before the cell-unit glass panel is formed, there are effects that direct damage such as a scratch and so on to the mother glass during the cutting process is capable of being prevented and also the mechanical rigidity is capable of being secured so that the glass panel is prevented from being damaged during the subsequent process.

In addition, in the present disclosure, since the first healing process and/or the second healing process is performed on the thermally chamfered glass panel so that a fine crack on the surface of the first tempered layer is removed, there are effects that the reduction in the strength of the glass panel is capable of being prevented and also the smoother surface of the curved portion is capable of being provided.

Meanwhile, though not explicitly mentioned, effects described in the present specification and tentative effects, expected from the technical features of the present specification will be treated as described in the present specification of the present disclosure.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view illustrating a glass panel according to an embodiment of the present disclosure;
FIG. 2 is a flowchart showing a method for forming a glass panel having a curved corner portion according to a first embodiment of the present disclosure;
FIG. 3 is a reference view illustrating a cutting process according to FIG. 2;
FIG. 4 is a cross-sectional view illustrating a glass panel on which a first tempered layer is formed after a first tempering process according to FIG. 2 is performed;
FIG. 5 is a flowchart showing a thermal chamfering process according to FIG. 2;
FIG. 6 is a reference view illustrating a thermal chamfering apparatus utilized when the thermal chamfering process according to FIG. 2 is performed;
FIG. 7A is a cross-sectional view illustrating a rounded corner portion being formed during the thermal chamfering process according to FIG. 2;
FIG. 7B is a cross-sectional view illustrating that the rounded corner portion is not formed when the tempering process is not performed before the thermal chamfering process;
FIG. 8 is a flowchart showing a second tempering process according to an embodiment of the present disclosure;
FIG. 9 is a cross-sectional view illustrating a glass panel on which a second tempered layer is formed after the second tempering process according to FIG. 8 is performed;
FIG. 10 is a cross-sectional view illustrating a glass panel on which the second tempered layer is formed after the second tempering process according to another embodiment of the present disclosure is performed;
FIG. 11 is a flowchart showing the method for forming a glass panel having a curved corner portion according to a second embodiment of the present disclosure;
FIG. 12 is a cross-sectional view illustrating a mother glass on which the first tempered layer is formed before a cutting process according to FIG. 11 is performed;
FIG. 13 is a reference view illustrating a cutting process according to FIG. 11;
FIG. 14 is a cross-sectional view illustrating a glass panel on which the first tempered layer is formed after the cutting process according to FIG. 13 is performed;
FIG. 15A is a cross-sectional view illustrating the rounded corner portion being formed during a thermal chamfering process according to FIG. 11;
FIG. 15B is a cross-sectional view illustrating that the rounded corner portion is not formed when the tempering process is not performed before the thermal chamfering process;
FIG. 16 is a cross-sectional view illustrating a glass panel on which the first tempered layer is partially etched after a first healing process according to FIG. 11 is performed;
FIG. 17 is a flowchart showing a second tempering process according to an embodiment of the present disclosure;
FIG. 18 is a cross-sectional view illustrating a glass panel on which a second tempered layer is formed after the second tempering process according to FIG. 17 is performed;
FIG. 19 is a cross-sectional view illustrating a glass panel on which the second tempered layer is formed after the second tempering process according to another embodiment of the present disclosure is performed;
FIG. 20 is a cross-sectional view illustrating a glass panel on which the first tempered layer and the second tempered layer are partially etched after a second healing process according to FIG. 11 is performed;
FIG. 21A and FIG. 21B are a plan view and a side view illustrating a glass panel formed by the method for forming a glass panel having a curved corner portion according to the first embodiment and the second embodiment of the present disclosure;
FIG. 22A and FIG. 22B are a plan view and a side view illustrating a glass panel formed according to Comparison example 1; and
FIG. 23A and FIG. 23B are a plan view and a side view illustrating a glass panel formed according to Comparison example 2.

### DETAILED DESCRIPTION

Hereinafter, embodiments of the present disclosure will be described in detail with reference to accompanying drawings. Various changes to the following embodiments are possible and the scope of the present disclosure is not limited to the following embodiments. The patent right of the present disclosure should be defined by the scope and spirit of the present disclosure as disclosed in the accompanying claims. In addition, embodiments of the present disclosure are intended to fully describe the present disclosure to a person having ordinary knowledge in the art to which the present disclosure pertains.

As used in this specification, a singular form may include a plural form unless definitely indicating a particular case in terms of the context. Also, the expressions "comprise" and/or "comprising" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these.

In addition, it should be noted that, although numbers may be used in describing configurations such as "first" and "second" below, the second configuration does not presuppose the first configuration, and each configuration may be mutually independent.

A glass panel 3 manufactured by a method (S1, S1') for forming a glass panel according to the present disclosure is applicable not only to a display for a mobile product, but also to a display for a vehicle and a display for a wearable device, as well as various arbitrary technical fields. It should be however noted that the application range thereof is not limited thereto.

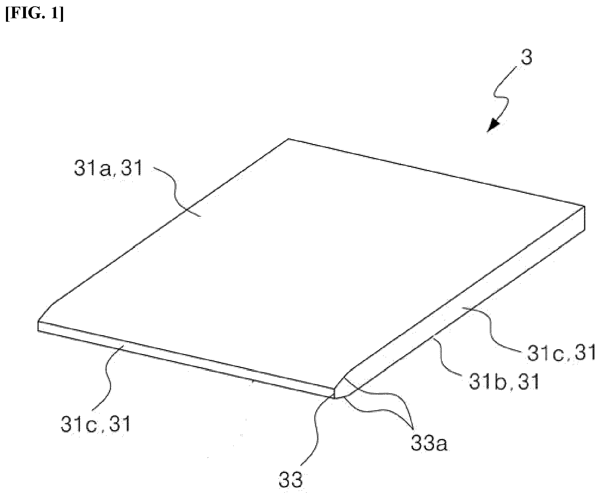

FIG. 1 is a perspective view illustrating a glass panel according to an embodiment of the present disclosure.

Referring to FIG. 1, as an example, the term "glass panel 3" may be Ultra-Thin Glass (UTG) which may be a thin plate glass or a glass thin film, but is not limited thereto. When the glass panel 3 is UTG, the glass panel 3 may have a thickness within a range of equal to or more than 1 µm and equal to or less than 100 µm as an example, but the scope of the present disclosure is not limited by the numerical range. In addition, a mother glass M or the glass panel 3 described below may be a silicate glass including at least one selected from the group consisting of an alumina (Al2O3) silicate glass, a silica glass, a potassium-lime glass, and a soda-lime glass. In addition, in order for controlling a material property of the mother glass M or the glass panel 3, the mother glass M or the glass panel 3 may include alkali metal ions such as Na+ or K+ as an example.

The glass panel 3 is formed in a substantially rectangular plate shape as an example. Furthermore, the glass panel 3 may have an outer surface portion 31 including a first surface 31a (or an upper surface), a second surface 31b (or a lower surface), and four side surfaces 31c, and may have a corner portion 33 where each pair of outer surface portions 31 meet each other. However, the glass panel 3 may be formed in an arbitrary polygonal plate shape other than the rectangular plate shape, and the shape of the glass panel 3 is not limited thereto. Each corner portion 33 may have a rounded shape or a D-cut shape. That is, a curved portion 33a having the rounded shape or the D-cut shape may be formed on at least one corner portion 33 selected from: the corner portion 33 at a boundary between the first surface 31a and one of the side surfaces 31c; the corner portion 33 at a boundary between the second surface 31b and the other one of the side surfaces 31c; and the corner portion 33 at a boundary between each pair of the side surfaces 31c. The term "rounded shape" is understood to mean a shape in which an outer surface of the corner portion 33 is curved.

It is understood that the term "corner portion 33" refers to a boundary where any one of the side surfaces 31c and the first surface 31a meet each other, a boundary where any one of the side surfaces 31c and the second surface 31b meet each other, or a boundary where each pair of the side surfaces 31c positioned adjacent to each other meet each other. In addition, the corner portion 33 may be formed along each longitudinal direction of the outer surface portions 31 from a side where each pair of the outer surface portions 31 is in contact with each other.

Hereinafter, the method S1 for forming a glass panel having a curved corner portion according to a first embodiment of the present disclosure will be described in detail with reference to the accompanying drawings.

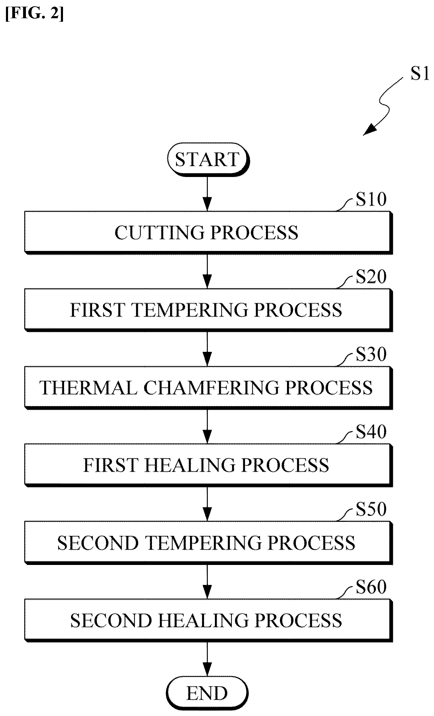

FIG. 2 is a flowchart showing a method for forming a glass panel having a curved corner portion according to a first embodiment of the present disclosure.

Referring to FIG. 2, the present disclosure relates to the method S1 for forming a glass panel having a curved corner portion. More particularly, the present disclosure relates to a method for forming the glass panel 3 having the corner portion 33 with a rounded shape or a D-cut shape by thermally chamfering the outer surface portion 31 and the corner portion 33 of the glass panel 3 by using a processing member 130 such as a heating rod and so on after the glass panel 3 cut from the mother glass M is tempered.

To this end, in the method S1 for forming a glass panel having a curved corner portion may include a cutting process S10, a first tempering process S20, a thermal chamfering process S30, a first healing process S40, a second tempering process S50, and a second healing process S60.

As will be described in detail below, the method S1 according to the first embodiment of the present disclosure is configured such that the first tempering process S20 is performed before the thermal chamfering process S30. In addition, it should be noted that the first healing process S40 and/or the second healing process S60 in the first embodiment is not an essential element of the present disclosure. Since the first healing process S40 may be performed in substantially the same manner as a first healing process S40' according to a second embodiment and the second healing process S60 may be performed in substantially the same manner as a second healing process S60' according to the second embodiment, the detailed description of the healing processes S40 and S60 will be replaced with the description of the healing processes S40' and S60' according to the second embodiment.

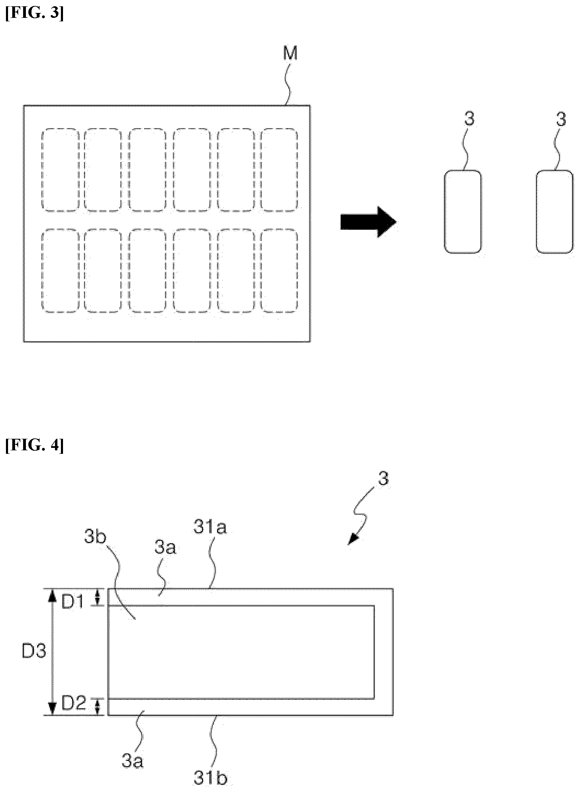

FIG. 3 is a reference view illustrating a cutting process according to FIG. 2.

Referring to FIG. 2 and FIG. 3, first, the cutting process S10 is a process in which at least one cell-unit glass panel 3 is acquired by cutting the mother glass M. Such cutting of the mother glass M may be performed through a laser cutting process, but the scope of the present disclosure is not limited by the example, and may be performed through any known process suitable for acquiring the glass panel 3 from the mother glass M. When the cutting process S10 is performed, glass dust and so on exist on the outer surface of the acquired glass panel 3. The generated glass dust may be removed from the glass panel 3 through the thermal chamfering process S30 that will be described later.

FIG. 4 is a cross-sectional view illustrating a glass panel on which a first tempered layer is formed after a first tempering process according to FIG. 2 is performed.

Referring to FIG. 2 and FIG. 4, the first tempering process S20 is a process in which the brittleness of the glass panel 3 that is acquired by the cutting process S10 is supplemented, and may be performed through a chemical tempering process as an example. The chemical tempering process may be a process in which alkali metal ions present on a surface of the glass panel 3 are replaced with cations or alkali metal ions having diameters larger than that of the alkali metal ions, thereby forming a first tempered layer 3a on the surface of the glass panel 3. As an example, Na+ ions on the surface of the glass panel 3 may be replaced with K+ ions through the chemical tempering process, but the scope of the present disclosure is not limited thereto, and it is sufficient that alkali metal ions present on the surface of the glass panel 3 are replaced with alkali metal ions having larger diameters. Hereinafter, the chemically tempered layer 3a formed through the first tempering process S20 is referred to as the "first tempered layer", and another chemically tempered layer 3c formed through the second tempering process S50 will be referred to as the "second tempered layer".

Hereinafter, the first tempering process S20 according to the first embodiment of the present disclosure will be described in more detail.

Generally, the glass panel 3 may include SiO2, Al2O3, Na+ within predetermined weight percentages, and may include various inorganic materials optionally. SiO2 is an essential composition constituting a glass composition, and Al2O3 is a composition which increases chemical durability, such as water resistance, of the composition constituting the glass panel and which facilitates a movement of alkali metal ions.

After the glass panel 3 including the composition as described above is prepared, a tempering solution including alkali metal ions as an example is prepared. The tempering solution containing alkali metal ions may be a solution containing K+ ions as an example, and may be a solution containing at least one selected from the group consisting of potassium nitrate (KNO3), potassium hydrogen phosphate (K2HPO4), potassium chloride (KCl), and potassium phosphate (K2PO4). Additionally, for the solution containing K+ ions, the solution may be a solution containing potassium nitrate (KNO3) and at least one inorganic salt selected from the group consisting of potassium carbonate (K2CO3), sodium carbonate (Na2CO3), potassium bicarbonate (KHCO3), sodium bicarbonate (NaHCO3), tripotassium phosphate (K3PO4), trisodium phosphate (Na3PO4), potassium sulfate (K2SO4), sodium sulfate (Na2SO4), potassium hydroxide (KOH), and sodium hydroxide (NaOH).

For example, when KNO3 is used as a tempering solution containing alkali metal ions, the KNO3 has a melting point of 334 degrees Celsius, so that the KNO3 is melted at a temperature of equal to or more than about 350 degrees Celsius and a temperature equal to or less than 450 degrees Celsius. Then, the glass panel 3 is dipped in the molten KNO3 for a predetermined time. As the dipping process is performed, Na+ ions present on the surface of the glass panel 3 may be replaced with K+ ions as an example. Therefore, the first tempered layer 3a with a predetermined thickness may be formed along the surface of the glass panel 3.

As the dipping process time increases, the first tempered layer 3a may be formed relatively thicker from the surface of the glass panel 3. Conversely, as the dipping process time decreases, the first tempered layer 3a may be formed relatively thinner. That is, the thickness of the first tempered layer 3a may be controlled by adjusting the dipping process time.

It is preferable that the first tempered layer 3a is formed such that the overall thickness D1 + D2 of the first tempered layer 3a is equal to or more than about 10% of a thickness D3 of the glass panel 3 and is equal to or less than 40% of the thickness D3 of the glass panel 3. In other words, it is preferable that the thickness (D1, D2) of the first tempered layer 3a formed on any one surface selected from the first surface 31a, the second surface 31b, and the side surfaces 31c of the glass panel 3 is equal to or more than about 5% and equal to or less than 20% of the thickness D3 of the glass panel 3 in a direction normal to the first surface 31a or the second surface 31b. When the overall thickness D1 + D2 of the first tempered layer 3a is formed to be less than 10% of the thickness D3 of the glass panel 3, the rounded shape of the corner portion 33 is not clearly formed, so that a corner shock or an edge shock that occurs when the glass panel 3 is mounted on a product is not sufficiently mitigated. Furthermore, when the overall thickness D1 + D2 of the first tempered layer 3a is formed to exceed 40% of the thickness D3 of the glass panel 3, a length of the outer surface portion 31 between the pair of corner portions 33 cannot be controlled to a desired level. However, the scope range of the present disclosure is not limited by the numerical range described above.

Meanwhile, after the tempering process is performed, a cleaning process may be performed in order to remove impurities and the tempering solution remaining on the surface of the glass panel 3. In the cleaning process, a primary cleaning using deionized water, a secondary cleaning using a basic solution such as potassium hydroxide (KOH) as an example, and a tertiary cleaning using deionized water may be sequentially performed. Here, the secondary cleaning using the basic solution may serve to neutralize the tempering solution remaining on the surface of the glass panel 3 after the tempering process, i.e., to neutralize a solution containing potassium nitrate. Furthermore, the secondary cleaning may also serve to remove impurities or foreign substances remaining on the surface of the glass panel 3. As the cleaning process is performed, a change in the thickness of the first tempered layer 3a due to K+ ions remaining on the surface of the glass panel 3 after the tempering process may be prevented.

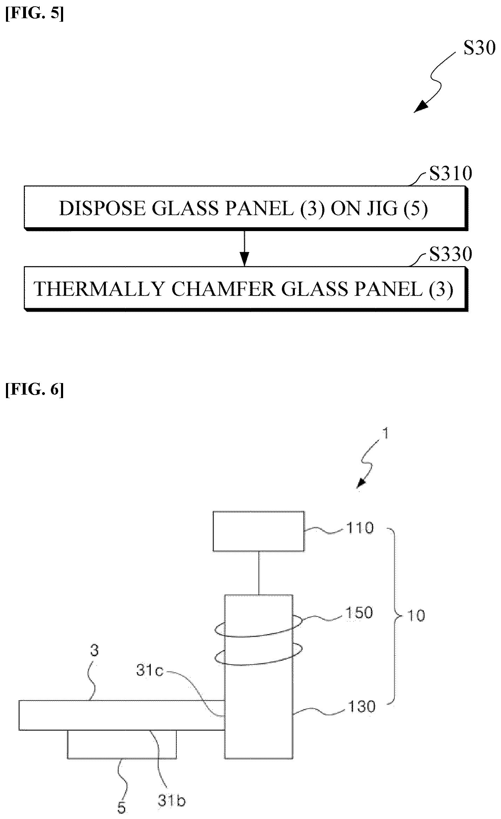

FIG. 5 is a flowchart showing a thermal chamfering process according to FIG. 2.

Referring to FIG. 2 and FIG. 5, after the first tempered layer 3a is formed on the surface of the glass panel 3 through the first tempering process S20, the thermal chamfering process is performed on the side surfaces 31c of the glass panel 3. In describing the thermal chamfering process S300 in detail, first, the glass panel 3 is disposed on a jig 5 (see FIG. 6) S310. The jig 5 has a flat upper surface, and is configured such that the glass panel 3 is seated on the upper surface of the jig 5. In addition, an adsorption hole (not illustrated) may be formed in the upper surface of the jig 5 and the second surface 31b of the glass panel 3 may be vacuum-adsorbed, but the scope of the present disclosure is not limited thereto. Then, the thermal chamfering process for the glass panel 3 is performed S330.

FIG. 6 is a reference view illustrating a thermal chamfering apparatus utilized when the thermal chamfering process according to FIG. 2 is performed.

Before describing the thermal chamfering process S530, a thermal chamfering apparatus 1 according to the first embodiment of the present disclosure will be schematically described with reference to the accompanying drawings.

Referring to FIG. 6, the thermal chamfering apparatus 1 may include a heating portion 10 having at least one side configured to be heated so as to process or chamfer the outer surface portion 31 and/or the corner portion 33 of the adjacent glass panel 3. Such a heating portion 10 may apply heat locally to a side of the glass panel 3 to be chamfered by a thermal processing method, thereby allowing glass to be separated from a body portion of the glass panel 3. Therefore, it is preferable that a temperature of the heating portion 10 is maintained at a temperature equal to or higher than a glass transition temperature of the glass panel 3.

To this end, the heating portion 10 may include a body portion 110, a processing member 130, and a heat transfer portion 150.

The body portion 110 is configured to fix the processing member 130 to one side of the body portion 110. Preferably, the body portion 110 is configured to fix the processing member 130 to a lower side of the body portion 110. As an example, the body portion 110 may be formed in a rod shape, but there is no specific limitation.

The processing member 130 is configured to be heated by receiving power and to process or thermally chamfer the outer surface portion 31 and/or the corner portion 33 of the adj acent glass panel 3. As an example, a tip portion of the processing member 130 may be formed of a ceramic material, but is not limited thereto. When such a processing member 130 is formed in a rod shape, it is preferable that only one point of the processing member 130 is in contact with the outer surface portion 31 and/or the corner portion 33 during a process of processing the outer surface portion 31 and/or the corner portion 33. That is, only one point of an outer circumferential surface of the processing member 13 is brought into contact with the glass panel 3.

In addition, the processing member 130 may be configured such that the processing member 130 is capable of being moved horizontally along the side surface 31c so as to process the side surface 31c and/or the corner portion 33 of the glass panel 3 disposed on the jig 5. When the thermal chamfering process S30 is performed, the processing member 130 is brought into contact with the adjacent glass panel 3 and presses the glass panel 3 in a horizontal direction or in a normal direction of one side surface of the glass panel 3. At this time, a Voice Coil Motor (VCM) may be utilized so as to maintain a constant pressing force. A constant pressing force controlled through the VCM may be within a range of equal to or more than about 50 gf and equal to or less than 100 gf. When the pressing force controlled through the VCM is less than 50 gf, precise shape control of the glass panel 3 is difficult to be performed. Furthermore, when the pressing force is more than 100 gf, damage to the glass panel 3 may occur.

In addition, for example, when the thermal chamfering process S30 is performed, the processing member 130 may be brought into contact with the glass panel 3 and may be moved at a constant speed along the longitudinal direction of the side surface 31c of the glass panel 3. At this time, the movement speed may be within a range of equal to or more than about 5 mm/s and equal to or less than 30 mm/s. The thickness of the glass panel 3 and the movement speed of the processing member 130 are inversely proportional to each other. When the movement speed is less than 5 mm/s, the shape control of the side surface 31c of the glass panel 3 is difficult to be performed. When the movement speed exceeds 30 mm/s, heat is not sufficiently transmitted to the glass panel 3, so that a desired shape control may be difficult to be performed or a problem that the heated glass is not easily separated from the glass panel 3 may occur.

In addition, the glass in the side surface 31c and/or the corner portion 33 of the glass panel 3 heated by the processing member 130 is rapidly cooled after the processing member 130 passes through, and the glass is naturally separated from the glass panel 3. Through the method S1 according to the first embodiment of the present disclosure, the glass panel 3 has the corner portion 33 with the curved rounded shape, and the detailed description thereof will be described later.

In addition, when the thermal chamfering process S30 is performed, the processing member 130 may be heated to a temperature within the range of equal to or more than 1000 degrees Celsius and equal to or less than 1500 degrees Celsius. When the temperature of the processing member 130 is less than 1000 degrees Celsius, melting of the glass panel 3 is difficult to be realized. Furthermore, when the temperature of the processing member 130 exceeds 1500 degrees Celsius, damage to the processing member 130 may occur.

The heat transfer portion 150 is configured to transfer heat to the processing member 130. As an example, the heat transfer portion 150 is positioned on an outer surface or an outer circumferential surface of the processing member 130, and may be heated by a high frequency induction heater (not illustrated) and may provide heat to the processing member 130. Therefore, for example, the processing member 130 may be disposed such that the processing member 130 passes through the heat transfer portion 150 that is an induction coil configuration. However, it is sufficient that the heat transfer portion 150 is configured to provide heat to the processing member 130 in addition to the induction coil configuration.

By utilizing the thermal chamfering apparatus 1, heat generated from the heat transfer portion 150 may be transferred to the processing member 130, and the glass may be separated from the body portion of the glass panel 3 by contacting the processing member 130 to the outer surface portion 31 and the corner portion 33 of the glass panel 3. As described above, according to the first embodiment of the present disclosure, it can be seen that the first tempering process S20 is performed before the thermal chamfering process S30.

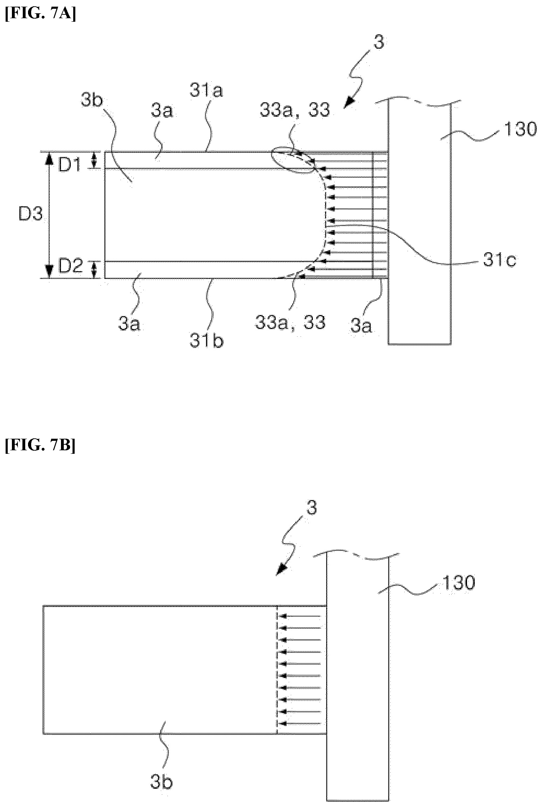

FIG. 7A is a cross-sectional view illustrating a rounded corner portion being formed during the thermal chamfering process according to FIG. 2, and FIG. 7B is a cross-sectional view illustrating that the rounded corner portion is not formed when the tempering process is not performed before the thermal chamfering process.

Referring to FIG. 7A, as described above, when the first tempering process S20 is performed before the thermal chamfering process S30, the first tempered layer 3a with a predetermined thickness may be formed along the surface of the glass panel 3. At this time, the first tempered layer 3a has a high thermal conductivity or a high coefficient of thermal expansion compared to that of the remaining region 3b (or the untempered region) of the glass panel 3. Therefore, when the thermal chamfering process for the glass panel 3 is performed through the processing member 130, the first tempered layer 3a may be chamfered to a relatively larger area within the same time due to a rapid conduction of heat transferred from the processing member 130 compared to that of the untempered region 3b. Therefore, each corner portion 33 of the glass panel 3 may have the curved portion 33a having the rounded shape or the D-cut shape.

In more detail, the first tempered layer 3a having the predetermined thickness may be formed on the first surface 31a (or the upper surface) and the second surface 31b (or the lower surface) opposite to the first surface 31a of the glass panel 3 according to the first embodiment of the present disclosure. In addition, at least one side surface of the first tempered layer 3a formed on the first surface 31a and the second surface 31b may have the rounded shape. For example, at least one side surface of the first tempered layer 3a formed on the first surface 31a and the second surface 31b may have the curved shape that is continuous with the corresponding side surface 31c of the glass panel 3. Therefore, since the first tempered layer 3a has a large thermal conductivity compared to that of the untempered region 3b of the glass panel 3, a thermal chamfering amount of the first tempered layer 3a increases as the first tempered layer 3a is positioned further away from the untempered region 3b and a thermal chamfering amount in the untempered region 3b increases as the untempered region 3b is positioned closer to the first tempered layer 3a, so that the curved corner portion 33 having the substantially D-cut shape is capable of being realized by only the thermal chamfering process S30.

Referring to FIG. 7B, conventionally, a thermal chamfering process was performed after a cutting process without performing a chemical tempering process, and then the chemical tempering process for the glass panel 3 on which the thermal chamfering process is performed was performed. At this time, since the glass panel 3 on which the chemically tempered layer 3a is not formed is chamfered, the outer surface portion 31 and the corner portion 33 that are brought into contact with the processing member 130 have substantially the same thermal conductivity or substantially the same thermal expansion coefficient. Therefore, when heat is applied to the outer surface portion 31 and the corner portion 33 by using the processing member 130, each corner portion 33 of the glass panel 3 is substantially formed in an angular shape or a linear shape.

Therefore, in the conventional process, a chemical tempering process is essentially performed as a process to supplement the brittleness of the glass panel 3. However, in order to form each corner portion 33 of the glass panel 3 in the rounded shape or the D-cut shape, a separate etching process or a separate chemical polishing process is required to be additionally performed.

On the other hand, according to the method S1 for forming a glass panel having a curved corner portion according to the first embodiment of the present disclosure, each corner portion 33 of the glass panel 3 may have the rounded shape or the D-cut shape by changing only the order of the conventional process without any additional process. Therefore, the process efficiency is increased, and the manufacturing cost of the glass panel 3 is also relatively reduced.

Referring to FIG. 2, the second tempering process S50 is a process in which the brittleness of the side surface 31c of the glass panel 3 having the rounded and curved corner portion 33 formed by the thermal chamfering process S30 is supplemented, and it should be noted that the second tempering process S50 is not an essential element of the present disclosure. When the side surface 31c of the glass panel 3 is thermally chamfered through the first tempering process S20 described above, the first tempered layer 3a at the side surface 31c may be separated from the glass panel 3. Therefore, the first tempered layer 3a formed on the side surface 31c of the glass panel 3 may be removed or may be formed to have the thickness that does not have the thickness required to supplement the brittleness. In order to solve such a problem, in the first embodiment of the present disclosure, the second tempering process S50 for the side surface 31c of the glass panel 3 is additionally performed, thereby forming the second tempered layer 3c.

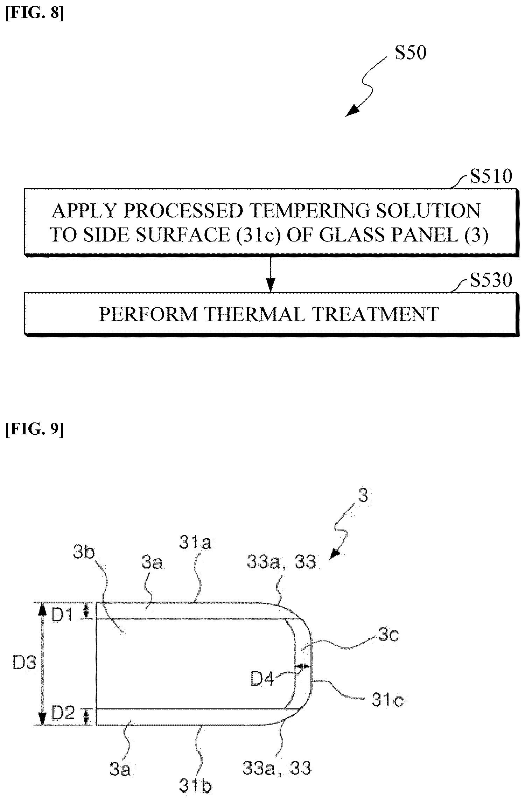

FIG. 8 is a flowchart showing a second tempering process according to an embodiment of the present disclosure, and FIG. 9 is a cross-sectional view illustrating a glass panel on which a second tempered layer is formed after the second tempering process according to FIG. 8 is performed.

Referring to FIG. 8 and FIG. 9, as an embodiment, the second tempering process S50 may be performed such that the second tempered layer 3c is formed only on the side surface 31c of the glass panel 3. At this time, an outer side surface of the second tempered layer 3c may have a curved shape continuous with the corresponding one side surface of the first tempered layer 3a.

To this end, in the second tempering process S50, the tempering solution containing alkali metal ions described above is processed in a form such as a slurry, a paste, a gel, and so on, and then the processed tempering solution is applied to the side surface 31c of the glass panel 3 S510. Then, a thermal treatment is performed, so that the second tempered layer 3c may be formed on the side surface 31c of the glass panel 3 S530. In process S530, it is preferable that the thermal treatment temperature is within a range of equal to or more than 250 degrees Celsius and equal to or less than 550 degrees Celsius. When the thermal treatment temperature is less than 250 degrees Celsius, it is not easy to form the second tempered layer 3c on the side surface of the glass panel 3. when the thermal temperature exceeds 550 degrees Celsius, a boundary line is formed on an interface where the second tempered layer 3c is in contact with the glass panel 3/the first tempered layer 3a, so that the mechanical property may be deteriorated. In addition, it is preferable that a width D4 of the second tempered layer 3a on the side surface 31c is within a range of equal to or more than about 5% and equal to or less than 20% of the thickness D3 of the glass panel 3.

Here, it is preferable that the thicknesses D1 and D2 of the first tempered layer 3a are larger than the width D4 of the second tempered layer 3c. When the width D4 of the second tempered layer 3c is equal to or thicker than the thicknesses D1 and D2 of the first tempered layer 3a, a flexible characteristic of the glass panel 3 may be reduced. Specifically, the width D4 of the second tempered layer 3c may have a range of approximately 40% to 60% of the thicknesses (D1 and D2) of the first tempered layer 3a. When the width D4 of the second tempered layer 3c is less than 40% of the thickness of the first tempered layer 3a, the brittleness of the side surface of the glass panel 3 cannot be sufficiently supplemented, the shock applied to the corner or the edge of the glass panel 3 cannot be sufficiently mitigated when the glass panel 3 is mounted/assembled on a product, and the mechanical rigidity of the desired level is difficult to be secured. Furthermore, when the width D4 of the second tempered layer 3c exceeds 60% of the thickness of the first tempered layer 3a, the flexible characteristic of the glass panel 3 may be reduced, thereby causing a damage to the glass panel 3 caused by the second tempered layer 3c.

Meanwhile, in the thermal treatment process for forming the second tempered layer 3c, K+ ions in the first tempered layer 3a may be diffused to the untempered region 3b of the glass panel 3, so that the thicknesses (D1 and D2) of the first tempered layer 3a may be increased. Therefore, the thermal treatment process time may be controlled so as to follow the thickness condition of the first tempered layer 3a and the second tempered layer 3C described above.

In addition, after the second tempered layer 3c is formed, the cleaning process may be performed in the same manner as in the first tempering process.

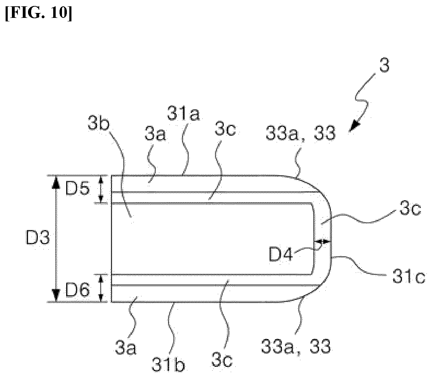

FIG. 10 is a cross-sectional view illustrating a glass panel on which the second tempered layer is formed after the second tempering process according to another embodiment of the present disclosure is performed.

Referring to FIG. 10, in the second tempering process S50 according to another embodiment of the present disclosure, the second tempered layer 3c may be formed on the side surface 31c of the glass panel 3, on a lower side directly below the first tempered layer 3a of the first surface 31a of the glass panel 3, and an upper side directly above the first tempered layer 3a of the second surface 31b. That is, the second tempered layer 3c may be formed together between the first tempered layer 3a and the glass panel 3. In addition, the outer side surface of the second tempered layer 3c may have the curved shape continuous with the corresponding one side surface of the first tempered layer 3a.

In FIG. 10, a structure in which the second tempered layer 3c and the first tempered layer 3a are stacked in the first surface 31a is illustrated. However, it can be seen that the thickness of the first tempered layer 3c at the first surface 31a is increased through the second tempering process S50, which is the same as the second tempered layer 3b below the second surface 31b. When the second tempering process S50 according to the second embodiment is performed, the total thickness D5 and D6 of the second tempered layer 3c and the first tempered layer 3a of the first surface 31a or the second surface 31b may have a value within a range of equal to or more than about 5% and equal to or less than 20% of the thickness D3 of the glass panel 3. The width of the second tempered layer 3c on one side surface 31c may also have a value within a range of equal to or more than about 5% and equal to or less than 20% of the thickness of the glass panel 3. In addition, it is preferable that the total thickness D5 and D6 of the second tempered layer 3c and the first tempered layer 3a of the first surface 31a and the second surface 31b is within a range of equal to or more than about 10% and equal to or less than 40% of the thickness D3 of the glass panel 3.

In addition, it is preferable that the width D4 of the second tempered layer 3c on the side surface 31c is within a range of equal to or more than about 5% and equal to or less than 20% of the thickness D3 of the glass panel 3. The thickness of the tempered layer (= the first tempered layer + the second tempered layer) at the first surface 31a or the second surface 31b and the width of the second tempered layer 3c at the side surface 31c may have a ratio of about 2 to 1. As an example, the width of the second tempered layer 3c may have a value within a range of equal to or more than about 40% and equal to or less than 60% of the sum of the thickness of the tempered layer (= the first tempered layer + the second tempered layer) at the first surface 31a or the second surface 31b, but the scope of the present disclosure is not limited by the numerical range. In addition, since the second tempering process S50 according to the second embodiment may be performed in substantially the same manner as the first tempering process S20, the detailed description thereof will be omitted.

Hereinafter, the method S1' for forming a glass panel having a curved corner portion according to the second embodiment of the present disclosure will be described in detail with reference to the accompanying drawings.

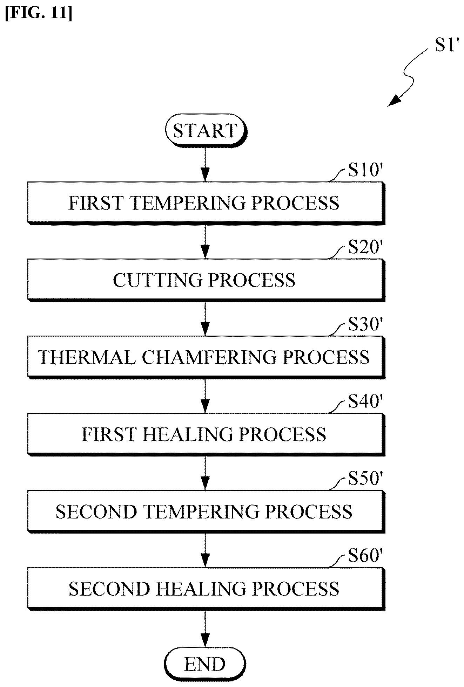

FIG. 11 is a flowchart showing the method for forming a glass panel having a curved corner portion according to a second embodiment of the present disclosure.

Referring to FIG. 11, the present disclosure relates to the method S1' for forming a glass panel having a curved corner portion. More particularly, the present disclosure relates to a method for forming a glass panel 3' having a corner portion 33' with a rounded shape or a D-cut shape by thermally chamfering an outer surface portion 31' and the corner portion 33' of the glass panel 3' by using the processing member 130 such as a heating rod and so on, the glass panel 3' being cut from the mother glass M after the mother glass M is tempered.

To this end, in the method S1' for forming a glass panel having a curved corner portion may include a first tempering process S10', a cutting process S20', a thermal chamfering process S30', a first healing process S40', a second tempering process S50', and a second healing process S60'.

It should be noted that the first healing process S40' and the second healing process S60' are not essential elements of the present disclosure. Furthermore, in some cases, both the first healing process S40' and the second healing process S60' may not be performed, or only one process selected from the first healing process S40' and the second healing process S60' may be performed.

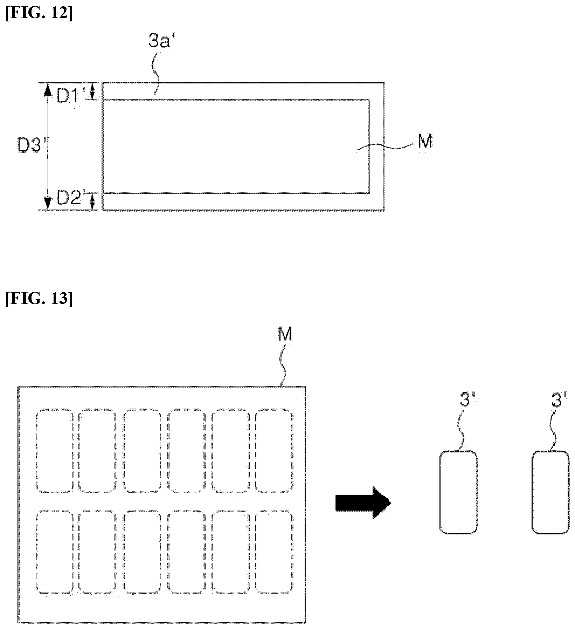

FIG. 12 is a cross-sectional view illustrating a mother glass on which the first tempered layer is formed before a cutting process according to FIG. 1 1 is performed.

Referring to FIG. 11 and FIG. 12, the first tempering process S10' is a process in which the brittleness of the mother glass M is supplemented, and may be performed through a chemical tempering process as an example. The chemical tempering process may be a process in which alkali metal ions present on a surface of the mother glass M are replaced with cations or alkali metal ions having diameters larger than that of the alkali metal ions, thereby forming a first tempered layer 3a' on the surface of the mother glass M. In addition, since the first tempering process S10' may be performed in substantially the same manner as the first tempering process S20 according to the first embodiment, the detailed description thereof will be omitted.

In addition, it is preferable that the first tempered layer 3a' is formed such that the overall thickness D1' + D2' of the first tempered layer 3a' is equal to or more than about 10% of a thickness D3 of the mother glass M and is equal to or less than 40% of the thickness D3 of the mother glass M. When the overall thickness D1' + D2' of the first tempered layer 3a' is formed to be less than 10% of the thickness D3' of the mother glass M, the rounded shape of the corner portion 33' is not clearly formed, so that a corner shock or an edge shock that occurs when the glass panel 3' is mounted on a product is not sufficiently mitigated. Furthermore, when the overall thickness D1' + D2' of the first tempered layer 3a' is formed to exceed 40% of the thickness D3 of the mother glass M, a length of the outer surface portion 31' between the pair of corner portions 33' cannot be controlled to a desired level. However, the scope range of the present disclosure is not limited by the numerical range described above.

As such, in the second embodiment, by chemically reinforcing the mother glass M before cutting the mother glass M, a scratch or other damage is prevented from being applied to the surface of the mother glass M when the cutting process S20' is performed, and the mechanical rigidity of the mother glass M is secured, so that the glass panel 3' is prevented from being damaged during the subsequent process.

In addition, after the first tempered layer 3a' is formed, a cleaning process may be performed in the same manner as in the first embodiment.

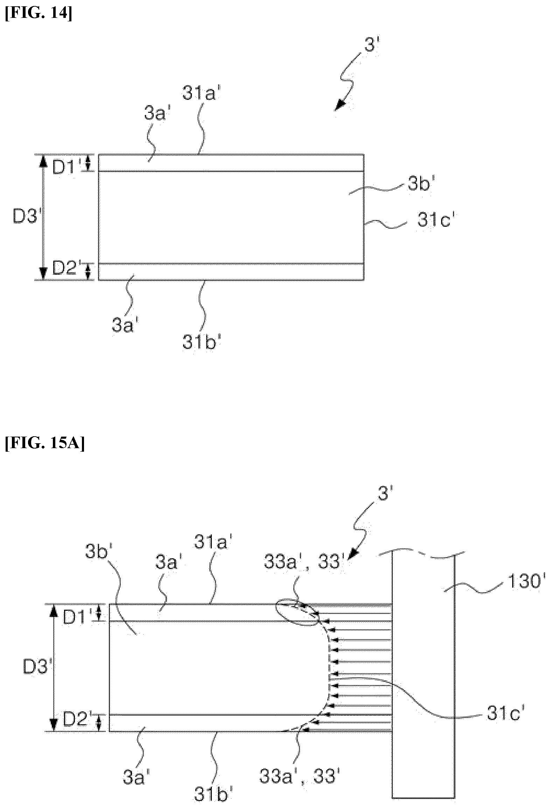

FIG. 13 is a reference view illustrating a cutting process according to FIG. 11, and FIG. 14 is a cross-sectional view illustrating a glass panel on which the first tempered layer is formed after the cutting process according to FIG. 13 is performed.

Referring to FIG. 11, FIG. 13, and FIG. 14, the cutting process S20' is a process in which at least one cell-unit glass panel 3' is acquired by cutting the mother glass M. The cutting process S20' may be performed in substantially the same manner as the cutting process S10 according to the first embodiment.

In addition, when the cutting process S20' is performed, the first tempered layer 3a' of the side surface 31c' of the glass panel 3' is removed, and the first tempered layer 3a' at the first surface 31a' (or the upper surface) of the glass panel 3' and the second surface 31b' (or the lower surface) opposite to the first surface 31a' may be maintained.

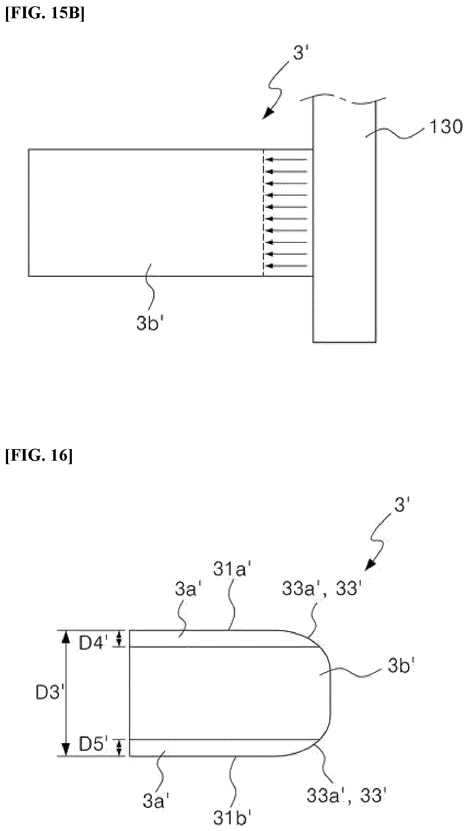

FIG. 15A is a cross-sectional view illustrating the rounded corner portion being formed during a thermal chamfering process according to FIG. 11, and FIG. 15B is a cross-sectional view illustrating that the rounded corner portion is not formed when the tempering process is not performed before the thermal chamfering process.

Referring to FIG. 15A and FIG. 15B, the thermal chamfering process S30' is a process in which the curved portion 33a' having the rounded shape or the D-cut shape is formed on the corner portion 33' of the glass panel 3' by utilizing the thermal chamfering apparatus 1. Since such a thermal chamfering process S30' is capable of being performed by utilizing the thermal chamfering apparatus 1 described in FIG. 6, the detailed description of the thermal chamfering apparatus 1 will be replaced with the description described above.

Referring to FIG. 15A, when the first tempering process S10' is performed and then the cutting process S20' is performed before the thermal chamfering process S30', the first tempered layer 3a' may be formed on the first surface 31a' and the second surface 31b' of the glass panel 3'. At this time, the first tempered layer 3a has a high thermal conductivity or a high coefficient of thermal expansion compared to that of an untempered region 3b' of the glass panel 3'. Therefore, when the thermal chamfering process for the glass panel 3' is performed through the processing member 130, the first tempered layer 3a' may be chamfered to a relatively larger area within the same time due to a rapid conduction of heat transferred from the processing member 130 compared to that of the untempered region 3b'. Therefore, each corner portion 33' of the glass panel 3' may have the curved portion 33a' having the rounded shape or the D-cut shape.

In more detail, the first tempered layer 3a' having the predetermined thickness may be formed on the first surface 31a' and the second surface 31b' of the glass panel 3' according to the second embodiment of the present disclosure. In addition, at least one side surface of the first tempered layer 3a' formed on the first surface 31a' and the second surface 31b' may have the rounded shape. For example, at least one side surface of the first tempered layer 3a' formed on the first surface 31a' and the second surface 31b' may have the curved shape that is continuous with the corresponding side surface 31c' of the glass panel 3'.

Referring to FIG. 15B, conventionally, a thermal chamfering process was performed after a cutting process without performing a chemical tempering process, and then the chemical tempering process for the glass panel 3' on which the thermal chamfering process is performed was performed. At this time, since the glass panel 3' on which the first tempered layer 3a' is not formed is chamfered, the outer surface portion 31' and the corner portion 33' that are brought into contact with the processing member 130 have substantially the same thermal conductivity or substantially the same thermal expansion coefficient. Therefore, when heat is applied to the outer surface portion 31' and the corner portion 33' by using the processing member 130, each corner portion 33' of the glass panel 3' is substantially formed in an angular shape or a linear shape.

FIG. 16 is a cross-sectional view illustrating a glass panel on which the first tempered layer is partially etched after a first healing process according to FIG. 1 1 is performed.

Referring to FIG. 11 and FIG. 16, the first healing process S40' is a process in which the glass panel 3' where the thermal chamfering process S30' is performed is etched to a predetermined thickness. For example, it is preferable that the first healing process S40' is performed on the entire surface of the glass panel 3'. Therefore, by the first healing process S40', the first tempered layer 3a' formed on the first surface 31a' and the second surface 31b' is partially removed, so that the thickness of the first tempered layer 3a' may be further reduced. As an example, by the first healing process S40', the thickness of the first tempered layer 3a' formed on the first surface 31a' and the second surface 31b' may be reduced to a predetermined thickness within a range of equal to or more than 1 µm and equal to or less than 3 µm (D1' > D4', D2' > D5'). In addition, the side surface 31c of the glass panel 3' may also be removed to a predetermined thickness along the side direction within a range of equal to or more than 1 µm and equal to or less than 5 µm. However, the removed thickness of the first tempered layer 3a' may be adjusted by controlling the performance time of the first healing process S40', and the scope of the present disclosure is not limited by the numerical range.

Through such a first healing process S40', a fine crack (or fracture) on the surface of the first tempered layer 3a' formed by the cutting process S20' and/or the thermal chamfering process S30' may be removed, so that a decrease in the strength of the glass panel 3' may be prevented and also a smoother surface or flat surface of the curved portion 33a' may be realized.

For example, the first healing process S40' may be performed by inserting at least one glass panel 3' in a tray (not illustrated) and then dipping the glass panel 3' into a healing composition or solution containing ammonium bifluoride (NH4HF2). At this time, ammonium bifluoride may be contained within a range of equal to or more than about 0.01 weight% and equal or less than 10 weight% of the total weight of the healing composition. In addition, after the first healing process S40' is performed, the cleaning process for the glass panel 3' may be further performed.

Referring to FIG. 11, the second tempering process S50' is a process in which the brittleness of the side surface 31c' of the glass panel 3' having the rounded and curved corner portion 33' is supplemented after the thermal chamfering process S30' or the first healing process S40', and it should be noted that the second tempering process S50' is not an essential element of the present disclosure. According to the method S1' according to the second embodiment, a separate tempered layer is not formed on the side surface 31c' of the glass panel 3'. In addition, when the first healing process S40' is further performed, the thickness of the first tempered layer 3a' on the first surface 31a' and the second surface 31b' of the glass panel 3' becomes thinner. Therefore, in the second embodiment of the present disclosure, the second tempering process S50' is additionally performed on at least one side surface 31c' of the glass panel 3' so as to form the second tempered layer 3c', thereby supplementing the brittleness of the glass panel 3'.

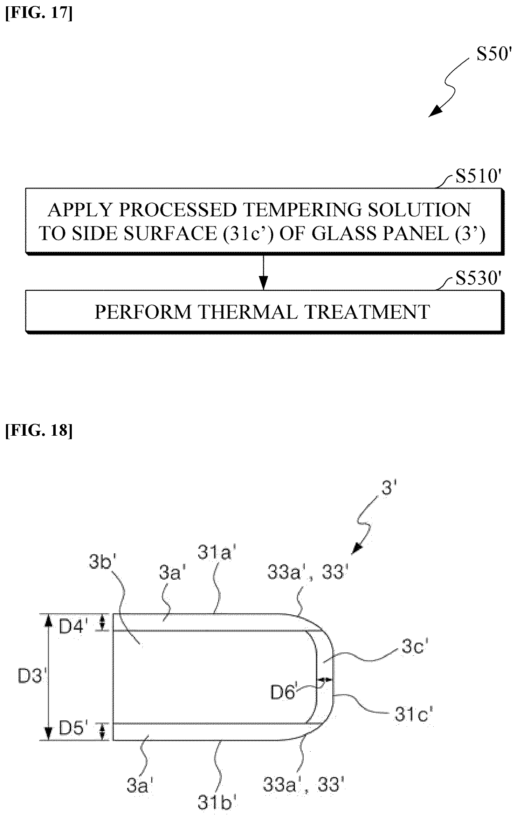

FIG. 17 is a flowchart showing a second tempering process according to an embodiment of the present disclosure, and FIG. 18 is a cross-sectional view illustrating a glass panel on which a second tempered layer is formed after the second tempering process according to FIG. 17 is performed.

Referring to FIG. 17 and FIG. 18, the second tempering process S50' according to an embodiment of the present disclosure may be performed such that the second tempered layer 3c' is formed only on the side surface 31c' of the glass panel 3'. At this time, an outer side surface of the second tempered layer 3c' may have a curved shape continuous with the corresponding one side surface of the first tempered layer 3a'. In addition, since the second tempering process S50' according to the embodiment of the present disclosure may be performed in substantially the same manner as the second tempering process S50 illustrated in FIG. 8, the detailed description thereof will be omitted.

After the second tempering process S50' is performed, it is preferable that the thicknesses

D4' and D5' of the first tempered layer 3a' are larger than the width D6' of the second tempered layer 3c'. In addition, it is preferable that the width D6' of the second tempered layer 3c' on the side surface 31c' is within a range of equal to or more than about 5% and equal to or less than 20% of the thickness D3' of the glass panel 3'. Specifically, the thickness D4' of the second tempered layer 3c' may have a range of approximately 40% to 60% of the thicknesses (D4' and D5') of the first tempered layer 3a'. In addition, after the second tempered layer 3c' is formed, the cleaning process may be performed in the same manner as in the first tempering process.

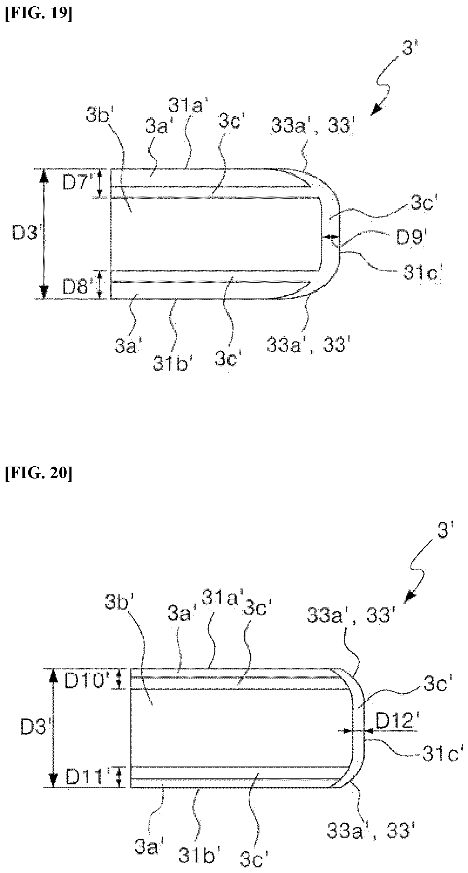

FIG. 19 is a cross-sectional view illustrating a glass panel on which the second tempered layer is formed after the second tempering process according to another embodiment of the present disclosure is performed.

Referring to FIG. 19, in the second tempering process S50' according to another embodiment of the present disclosure, the second tempered layer 3c' may be formed on the side surface 31c' of the glass panel 3', on a lower side directly below the first tempered layer 3a' of the first surface 31a' of the glass panel 3', and an upper side directly above the first tempered layer 3a' of the second surface 31b'. That is, the second tempered layer 3c' may be formed together between the first tempered layer 3a' and the glass panel 3'. In addition, since the second tempering process S50' according to another embodiment of the present disclosure may be performed in substantially the same manner as the second tempering process S50 illustrated in FIG. 10, the detailed description thereof will be omitted.

When the second tempering process S50' according to another embodiment of the present disclosure is performed, the total thickness D7' and D8' of the second tempered layer 3c' and the first tempered layer 3a' of the first surface 31a' or the second surface 31b' may have a value within a range of equal to or more than about 5% and equal to or less than 20% of the thickness D3' of the glass panel 3'. In addition, it is preferable that the total thickness D7' and D8' of the second tempered layer 3c' and the first tempered layer 3a' of the first surface 31a' and the second surface 31b' is within a range of equal to or more than about 10% and equal to or less than 40% of the thickness D3' of the glass panel 3'. In addition, it is preferable that the width D9' of the second tempered layer 3a' is within a range of equal to or more than about 5% and equal to or less than 20% of the thickness D3' of the glass panel 3'. The thickness of the tempered layer (= the first tempered layer + the second tempered layer) at the first surface 31a' or the second surface 31b' and the width of the second tempered layer 3c' at the side surface 31c' may have a ratio of about 2 to 1. As an example, the width in the side direction of the second tempered layer 3c' may have a value within a range of equal to or more than about 40% and equal to or less than 60% of the sum of the thickness of the tempered layer (= the first tempered layer + the second tempered layer) at the first surface 31a' or the second surface 31b', but the scope of the present disclosure is not limited by the numerical range. In addition, since the second tempering process S50' may be performed in substantially the same manner as the first tempering process S10', the detailed description thereof will be omitted.

FIG. 20 is a cross-sectional view illustrating a glass panel on which the first tempered layer and the second tempered layer are partially etched after a second healing process according to FIG. 11 is performed.

Referring to FIG. 11 and FIG. 20, the second healing process S60' is a process in which the first tempered layer 3a' and the second tempered layer 3c' of the glass panel 3' are etched to a predetermined thickness. For example, as same as in the first healing process S40', it is preferable that the second healing process S60' is performed on the entire surface of the glass panel 3'. Therefore, by the second healing process S60', the first tempered layer 3a' formed on the first surface 31a' and the second surface 31b' is partially removed, so that the thickness of the first tempered layer 3a' may be further reduced. As an example, by the second healing process S60', the thickness of the first tempered layer 3a' formed on the first surface 31a' and the second surface 31b' may be reduced to a predetermined thickness within a range of equal to or more than 0.1 µm and equal to or less than 1 µm (D7' > D10', D8' > D11'). In addition, the width of the second tempered layer 3c' on the side surface 31c' of the glass panel 3' may be reduced to a predetermined thickness within a range of equal to or more than 0.1 µm and equal to or less than 1 µm (D9' > D12'). However, the removed thickness of the first tempered layer 3a' and the second tempered layer 3c' may be adjusted by controlling the performance time of the first healing process S40', and the scope of the present disclosure is not limited by the numerical range.

After performing the second healing process S60', it is preferable that the total thickness (D10' + D11') of the second tempered layer 3c' and the first tempered layer 3a' of the first surface 31a' and the second surface 31b' of the glass panel 3' is within a range of equal to or more than about 10% and equal to or less than 40% of the thickness D3' of the glass panel 3' and it is preferable that the width D12' of the second tempered layer 3c' is within a range of equal to or more than about 5% and equal to or less than 20% of the thickness D3' of the glass panel 3', but the scope of the present disclosure is not limited to the numerical range.

Through such a second healing process S60', a fine crack (or fracture) on the surface of the first tempered layer 3a' and the second tempered layer 3c' formed by the cutting process S20' and/or the thermal chamfering process S30' may be removed, so that a decrease in the strength of the glass panel 3' may be prevented and also a smoother surface or flat surface of the curved portion 33a' may be realized.

In addition, since the second healing process S60' may be performed in substantially the same manner as the first healing process S40', the detailed description thereof will be omitted. At this time, it is preferable that the overall performance time of the second healing process S60' is shorter than that of the first healing process S40'.

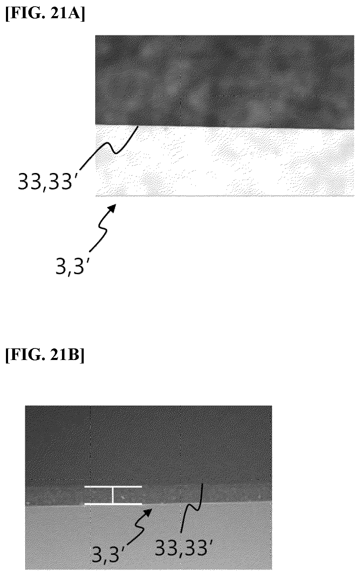

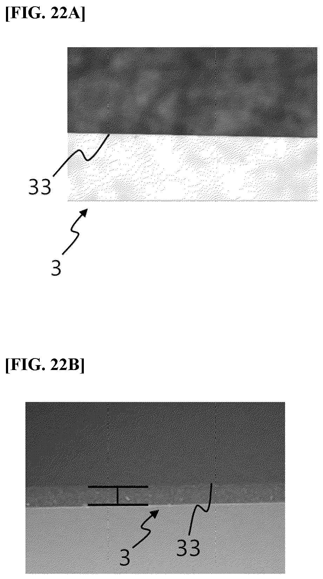

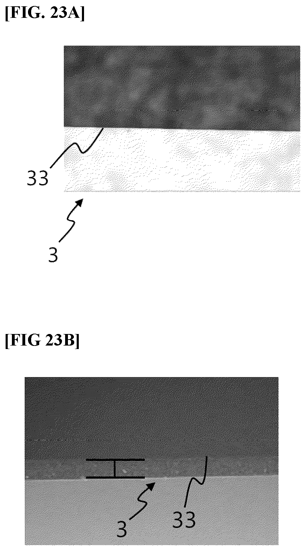

FIG. 21A and FIG. 21B are a plan view and a side view illustrating a glass panel formed by the method for forming a glass panel having a curved corner portion according to the first embodiment and the second embodiment of the present disclosure, FIG. 22A and FIG. 22B are a plan view and a side view illustrating a glass panel formed according to Comparison example 1, and FIG. 23A and FIG. 23B are a plan view and a side view illustrating a glass panel formed according to Comparison example 2.

Hereinafter, the method (experimental example) for forming a glass panel according to an embodiment of the present disclosure and comparison examples will be described with reference to the accompanying drawings.

In Comparison example 1, only the thermal chamfering process is performed on the glass panel 3 after the cutting process is performed on the mother glass M cutting process. In Comparison example 2, after the cutting process is performed on the mother glass M, the thermal chamfering process is performed on the glass panel 3 and then the tempering process is performed. In the experimental example, Comparison example 1, and Comparison example 2, parameters such as the temperature, the time, the composition weight%, and so on have substantially the same value.

Referring to FIG. 21A and FIG. 21B, in the experimental example, after the cutting process S10 and the first tempering process S30 are performed, the thermal chamfering process S50 for the outer surface portion 31 and the corner portion 33 of the tempered glass panel 3 is performed by using the thermal chamfering apparatus 1 described above. Alternatively, in the comparison examples, after performing the first tempering process S10' on the mother glass M, the cutting process S20' and the thermal chamfering process S30' are performed. At this time, it can be seen that the rounded curved portions 33a and 33a' are formed along the longitudinal direction of the corner portions 33 and 33'.

Referring to FIG. 22A and FIG. 22B, in Comparison example 1, i.e., in a situation in which only the thermal chamfering process S50 is performed after the cutting process S10, it can be seen that the curved portion 33a is not formed on the corner portion 33 of the glass panel 3 and the corner portion 33 is substantially connected to the adjacent outer surface portion 31 in a straight line.

Referring to FIG. 23A and FIG. 23B, in Comparison example 2, i.e., in a situation in which the tempering process S30 is performed after the cutting process S10 and the thermal chamfering process S50 are performed, it can be seen that the curved portion 33a is not formed on the corner portion 33 of the glass panel 3 and the corner portion 33 is substantially connected to the adjacent outer surface portion 31 in a straight line as same as Comparison example 1.

The foregoing detailed description is for illustrative purposes only. Furthermore, the description provides an embodiment of the present disclosure and the present disclosure may be used in other various combination, changes, and environments. That is, the present disclosure may be changed or modified within the scope of the present disclosure described herein, a range equivalent to the description, and/or within the knowledge or technology in the related art. The embodiments show an optimum state for achieving the spirit of the present disclosure, and various modification required for specific applications and uses of the present disclosure are also possible. Therefore, the detailed description of the present disclosure is not intended to limit the present disclosure in the embodiment.

## Claims

1. A method for forming a glass panel having a curved corner portion, the method comprising:
a cutting process in which at least one cell-unit glass panel is acquired by cutting a mother glass;
a first tempering process in which a first tempered layer is formed on a first surface of the glass panel and/or a second surface opposite to the first surface; and
a thermal chamfering process in which an outer surface portion and a corner portion of the glass panel that is cut and that has the first tempered layer are thermally chamfered,
wherein, after the thermal chamfering process is performed, the glass panel provided with the first tempered layer has a rounded corner portion.

2. The method of claim 1, wherein, in the first tempering process, the first tempered layer is formed on the mother glass before the cutting process is performed.

3. The method of claim 1, wherein, in the first tempering process, the first tempered layer is formed on the glass panel that is cut.

4. The method of claim 1, wherein the glass panel comprises alkali metal ion having a first diameter, and the first tempering process comprises a dipping process in which the glass panel is dipped into a tempering solution comprising alkali metal ions having a second diameter that is larger than the first diameter.

5. The method of claim 1, further comprising:
a second tempering process in which a second tempered layer is formed on at least one side surface of the glass panel that is thermally chamfered,
wherein an outer side surface of the second tempered layer has a curved shape continuous with an adjacent side surface of the first tempered layer.

6. The method of claim 5, wherein the glass panel that is thermally chamfered comprises alkali metal ions having a first diameter,
wherein the second tempering process comprises:
preparing a tempering solution comprising alkali metal ions having a second diameter that is larger than the first diameter;
applying the tempering solution to a side surface of the glass panel that is thermally chamfered; and
thermally treating the glass panel to which the tempering solution is applied.

7. The method of claim 6, wherein, in the thermally treating, a thermal treatment temperature is within a range or equal to or more than 250 degrees Celsius and equal to or less than 550 degrees Celsius.

8. The method of claim 1, wherein the thermal chamfering process comprises:
placing the tempered glass panel on a jig; and
performing thermal chamfering for the glass panel on the jig by using a thermal chamfering apparatus,
wherein the thermal chamfering apparatus comprises:
a body portion configured to fix a processing member to a lower side of the body portion;
the processing member configured to be heated by receiving power and to thermally chamfer the outer surface portion and/or the corner portion of the glass panel on the jig, the processing member being configured as a heating rod; and
a heat transfer portion configured to transfer heat to the processing member.

9. The method of claim 8, wherein the thermal chamfering process comprises:
performing thermal chamfering by bringing the heated processing member into contact with a side surface of the tempered glass panel and by moving the heated processing member along a longitudinal direction of the side surface of the tempered glass panel.

10. The method of claim 9, wherein the heated processing member is configured to press the side surface of the glass panel with a constant pressing force within a range of equal to or more than 50 gf and equal to or less than 100 gf in a normal direction of the side surface of the tempered glass panel.

11. The method of claim 5, further comprising:
a first healing process in which the first tempered layer is etched to a predetermined thickness between the thermal chamfering process and the second tempering process,
wherein the first healing process is performed by dipping the glass panel into a healing composition containing ammonium bifluoride.

12. The method of claim 5, further comprising:
a second healing process in which the first tempered layer and the second tempered layer are etched to a predetermined thickness after the second tempered layer is formed on at least one side surface of the glass panel.

13. The method of claim 1, further comprising:
a cleaning process in which a tempering solution remaining on an outer surface of the glass panel immediately after the first tempering process is removed,
wherein, in the cleaning process, the tempering solution remaining on the outer surface of the glass panel is neutralized by using a basic solution.

14. A glass panel having a curved corner portion, the glass panel comprising:
a first tempered layer provided on at least one side selected from a first surface and a second surface opposite to the first surface,
wherein one side surface of the first tempered layer has a rounded shape.

15. The glass panel of claim 14, further comprising:
a second tempered layer provided on one side surface of the glass panel,
wherein an outer side surface of the second tempered layer has a curved shape continuous with an adjacent side surface of the first tempered layer at the first surface or at the second surface.
